(19) Europäisches Patentamt
European Patent Office
Office européen des brevets

(11) Publication number: **0 099 646**
**B1**

(12) # EUROPEAN PATENT SPECIFICATION

(45) Date of publication of patent specification: **17.09.86**

(51) Int. Cl.$^4$: **C 08 F 210/02,** C 10 L 1/18

(21) Application number: **83303453.1**

(22) Date of filing: **15.06.83**

(54) **Preparation of ethylene terpolymers.**

(30) Priority: **18.06.82 GB 8217794**

(43) Date of publication of application:
**01.02.84 Bulletin 84/05**

(45) Publication of the grant of the patent:
**17.09.86 Bulletin 86/38**

(84) Designated Contracting States:
**AT BE CH DE FR GB IT LI LU NL SE**

(56) References cited:
**DE-A-1 924 823**
**FR-A-1 529 348**
**GB-A-1 462 628**
**US-A-4 178 951**

(73) Proprietor: **Exxon Research and Engineering Company**
**P.O.Box 390 180 Park Avenue**
**Florham Park New Jersey 07932 (US)**

(72) Inventor: **Davies, Brian William**
**1 Brook Farm Cottages The Cleave**
**Harwell Oxfordshire OX11 0EW (GB)**
Inventor: **Nuttens, Hugo Jozef Corneel**
**Lariksdreef 38**
**B-2120 Schoten (BE)**

(74) Representative: **Northover, Robert Frank et al**
**ESSO Chemical Limited**
**Esso Chemical Research Centre P.O. Box 1**
**Abingdon Oxfordshire, OX13 6BB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 099 646 B1

Courier Press, Leamington Spa, England.

**Description**

This invention concerns the preparation of ethylene copolymers, and is particularly concerned with the production of low molecular weight polymers containing vinyl acetate.

Low molecular weight ethylene copolymers, and particularly ethylene/vinyl acetate copolymers (EVA) are used in wax modification, pour depressants, flow improvers and dewaxing aids. For these applications the copolymers are often required with molecular weights in the region of 500 to 5500, and the preparation of such polymers presents problems, particularly as the product may be in the form of a wax or liquid.

Low molecular weight ethylene copolymers may be prepared by a solution polymerization process — for example, as described in GB 1263152. A portion of comonomer is dissolved in a non-reactive solvent and brought to a temperature of 70 to 130°C. Ethylene is introduced at moderate pressure of 500 to 30000 psig (35 to 2100 kg/cm$^2$), then catalyst and further monomer are added.

A high pressure substantially solvent-free process is described in GB 1368159, in which ethylene copolymers are prepared with molecular weight between 500 and 4500 and 30 to 75% comonomer selected from vinyl esters of from 4 to 10 carbon atoms and acrylates and methacrylates of alcohols of from 1 to 12 carbon atoms. The process operates at greater than 1000 bar and at 150 to 350°C in the presence of a free radical catalyst and/or oxygen and 0.1 to 5% by volume (based on the monomer mixture) of a polymerization regulator having a $C_S$ value of at least 1 × 10—2, the residence time being from 30 to 180 seconds. Regulators disclosed are acetone, n-butyraldehyde, cyclohexanone, propionaldehyde, methyl ethyl ketone, tetrahydrofuran, 1,3-dioxolane, n-heptaldehyde, cyclopentane and butene-1.

Published Japanese Patent Application 56—141390 describes an additive for distillate fuel oils comprising an ethylene/ethylenically unsaturated ester copolymer having 10 to 50 wt% ester monomer, a molecular weight of 1000 to 5000 and 6 to 15 methyl terminated side chains per 100 methylene groups. The copolymer is prepared in a high pressure polymerisation at 500 to 4000 kg/cm$^2$ using a polymerisation regulator such as propane, butane, propylene, butene, propionaldehyde, methylethylketone, tetrahydrofuran, n-butyraldehyde, acetone or cyclohexanone.

In GB 1462628 there is described a process for preparing terpolymers of ethylene containing 18 to 28% by weight vinyl acetate and 0.5 to 3% by weight isobutylene at high temperatures and pressures, but the terpolymers produced are for use as resins in hot melt coating and a maximum melt index of 550 is disclosed.

US 4 178 950 and US 4 178 951 disclose ethylene/vinyl acetate/olefin terpolymers having a molecular weight of 5000 to 80000 or more as a component of a low pour residual fuel oil composition or of a crude oil composition.

We have now found that ethylene terpolymers having a low molecular weight in the range of 1500 to 5500, and conversely a very high melt index (which is difficult to measure by normal techniques but is estimated as in excess of 40000), and a vinyl acetate content of 10 to 20% by weight, may be prepared by a high pressure polymerization process, which has the advantages of a short reaction time and avoiding the use of large amounts of solvent.

We have discovered a process for the preparation of an ethylene terpolymer containing from 10 to 20% by weight vinyl acetate, having a number average molecular weight ($\overline{M}_n$) of from 1500 to 5500 and from 6 to 15 methyl groups per 100 methylene groups — other than methyl groups on the vinyl acetate — as measured by nuclear magnetic resonance, in which process ethylene is polymerized with vinyl acetate at a pressure of at least 500 bar and at a temperature of at least 150°C in the presence of an appropriate amount of an iso olefin of the general formula:

$$R—CH_2—\overset{\displaystyle CH_3}{\overset{|}{C}}=CHR' \qquad (I)$$

(wherein R and R′ which may be the same or different each represent hydrogen or an alkyl group having from 1 to 4 carbon atoms) to give the desired combination of molecular weight and methyl groups per 100 methylene groups.

The iso olefin is believed to act as a chain transfer agent which controls the molecular weight of the terpolymer product. The iso olefin is however also incorporated into the polymer backbone and is believed to give rise to a characteristic polymer structure. The iso olefin incorporation provides two methyl groups emanating from the same backbone carbon atom which is believed to contribute to the performance of the terpolymers of the invention as additives in fuels. The iso olefin preferably has from 4 to 6 carbon atoms, and may, for example, be isobutylene, 2-methyl-but-2-ene or 2-methyl-pent-2-ene. Particularly good results may be obtained with isobutylene (wherein R and R′ are hydrogen).

It has been found particularly surprising that by using iso olefins and particularly isobutylene as the chain transfer agent it is possible to obtain an ethylene terpolymer having a particular combination of molecular weight and methyl groups for 100 methylene groups that makes the copolymer an excellent additive for use in pour point depression, wax modification and flow improvement in petroleum fractions, and particularly in middle distillate fuels, and for use as a viscosity index additive in lubricating oils.

Thus, this invention provides a process for the preparation of an ethylene terpolymer containing from 10 to 20% by weight vinyl acetate (VA), having $M_n$ of from 1500 to 5500 and a from 6 to 15 methyl groups per 100 methylene groups other than methyl groups in the vinyl acetate, in which process ethylene is polymerized with vinyl acetate at a pressure of at least 500 bar and at a temperature of at least 150°C in the presence of from 7 to 25% by weight, preferably 7 to 14% by weight, based on the total reaction mixture, of iso olefin, the reaction conditions and amount of iso olefin being selected to give the desired combination of molecular weight and methyl groups per 100 methylene groups.

It has been found that the ethylene terpolymers prepared in this way show a significant amount of iso olefin incorporation. In the case of isobutylene this incorporation has been shown by $^{13}C$ nmr to be a result of the formation of a terpolymer of ethylene/vinyl acetate/isobutylene rather than as a mixture of EVA and polyisobutylene.

Thus the terpolymer product is structurally different from an EVA made by solution polymerization and having the same VA content, $M_n$ and number of methyl groups per 100 methylene groups. It is further surprising feature of the invention that the terpolymers, despite being structurally distinct from such EVAs, show activity in flow improving ability at low temperatures at least comparable with the EVAs.

In a further preferred aspect this invention provides ethylene terpolymers having a $M_n$ of from 1500 to 5500 and from 6 to 15 methyl groups per 100 methylene groups other than methyl groups in the vinyl acetate and comprising from 10 to 20% by weight vinyl acetate and from 3 to 15% by weight of the iso olefin of the general formula (I).

For the case when the iso olefin is isobutylene the degree of incorporation can be measured by the peak at a chemical shift of 42.3 in the $^{13}C$ nmr spectrum of the polymer. The $^{13}C$ nmr spectrum of the ethylene/vinyl acetate/isobutylene terpolymers shows characteristic peaks for the incorporated isobutylene at shifts of 42.3, 32.7, 27.4 and 24.2. The peak at a chemical shift of 42.3 is chosen to measure isobutylene incorporation because it is relatively isolated in the nmr spectrum.

The terpolymers of the invention preferably have from 6 to 11, more preferably 6 to 9 methyl groups per 100 methylene groups other than methyl groups in the vinyl acetate. The preferred range of molecular weight ($M_n$) is from 1500 to 4500, more preferably from 3000 to 4000. The iso olefin, preferably isobutylene, incorporation is preferably from 3 to 8% by weight.

The methyl groups in the terpolymers of the invention are of two types: firstly due to the iso olefin incorporation and secondly resulting from ethylene polymerisation. It is a surprising feature of the invention that total number of methyl groups of 6 to 15 is obtained with relatively a few methyl groups resulting from ethylene polymerisation. In a preferred aspect the methyl groups resulting from ethylene polymerisation (and thus excluding iso olefin branching) is from 2 to 5.

The preparation of the ethylene copolymers according to the invention may be carried out in a conventional high pressure polymerization apparatus, either on a batch or continuous basis. Thus, it is possible to employ either conventional autoclave or tubular reactors. However, some modification of conventional apparatus may be required to handle the product which will generally be in a molten, fluid state and thus unsuitable for forming into pellets.

The pressure in the reactor for the polymerization is preferably in the range of 700 to 1900 bar, and the temperature of the reactor is preferably in the range of from 170 to 270°C, and the particular conditions of temperature and pressure are dictated by the type and design of the reactor and the amount of iso olefin used. It is believed to be within the competence of one skilled in the art to select the appropriate conditions following the guidance provided herein. The residence time in the reactor is typically from 20 to 120 seconds, and preferably at least 30 seconds.

The polymerization will normally be initiated by free radicals, and the choice of suitable free radical catalysts/initiators is believed to be within the competence of one skilled in the art. By way of example, peroxides, hydroperoxides, azo compounds and oxygen, or mixtures of two or more of these compounds, may be used.

Specific examples of initiators are t-butyl-isobutyrate, t-butyl peroctoate (t-butyl per-2-ethylhexanoate) and t-butyl perpivalate. The initiator is generally used in an amount of from 400 to 1200 ppm by weight of the reactor feed. The initiator is preferably added in a hydrocarbon solvent such as hexane, octane or isododecane. By the term "in the absence of any significant amount of solvent" used herein in relation to the process of invention it is not intended to exclude such use of minor amounts of solvent for the initiator, but to indicate that no solvent is required for the polymerisation itself.

The invention extends to distillate fuel oil compositions containing a flow improving amount, typically from 0.001 to 2 wt% of the oil, of the terpolymer of the invention, optionally in conjunction with one or more other distillate fuel additives. It also extends to the use of the terpolymers as flow improvers in distillate fuel oils and as pour point depressants, and to the use of the terpolymers as viscosity index improvers in lubricating oils.

The following Examples and Evaluations are now given, though only by way of illustration, to show certain aspects of the invention in more detail.

Example 1

A mixture containing 15 wt% vinyl acetate, 15.6 wt% isobutylene, 500 ppm t-butyl peroctoate, the balance being ethylene, was polymerised in an autoclave reactor at 700 bar pressure. The residence time

was 30 sec. and the temperature was 215°C. The rate of conversion was 7.7%. The product was an ethylene/vinyl acetate/isobutylene/terpolymer with a molecular weight of 1700 (as measured by vapour phase osmometry), 10 methyl groups per 100 $CH_2$ (by NMR) and vinyl acetate concentration of 15.6 wt% (as measured by NMR).

Example 2

The procedure of Example 1 was repeated but with a reactor pressure of 1500 bar and a temperature of 222°C. The residence time was 30 sec. and the conversion was 14.7%. The ethylene/vinyl acetate/isobutylene terpolymer had a molecular weight of 3400, 10.1 methyl groups/100 $CH_2$, and a vinyl acetate concentration of 14.8 wt%.

Example 3

The procedure of Example 1 was again repeated but with a pressure of 1900 bar and a temperature of 221°C. The residence time was 30 sec. and the conversion was 17.2%. The ethylene/vinyl acetate/isobutylene terpolymer had a molecular weight of 4,100, 6.8 methyl groups/100 $CH_2$ and vinyl acetate content of 13 wt%.

Example 4

A mixture containing 15 wt% vinyl acetate, 15.7 wt% isobutylene, 400 ppm of t-butylperoctoate, the balance being ethylene, was polymerized in án autoclave reactor at 1200 bar and a temperature of 217°C. The residence time was 30 sec. and the conversion was 10.3%. The obtained terpolymer had a molecular weight of 3800, a vinyl acetate content of 13.5% and 9.6 methyl groups/100 $CH_2$.

Example 5

The procedure of Example 4 was repeated using similar conditions but the amount of isobutylene was increased to 23 wt% of the reaction mixture. The reactor temperature was 212°C.

The formed product had a molecular weight of 3600 but 12.2 methyl groups/100 $CH_2$. The vinyl acetate content was measured as 15.4 wt% and the isobutylene incorporation as 7.4 wt%.

The results of the Examples are summarized in the following table:

TABLE 1

| | Reactor Feed Composition | | | | | Reactor Conditions | | | | | Resin Properties | |
|---|---|---|---|---|---|---|---|---|---|---|---|---|
| | | Chain Transfer Agent | | Initiator | | | | | | | | |
| Example | wt% VA | wt% | type | conc. ppm | type | Temp. °C | Press. bar | Resid. time sec. | Conv. | $\overline{Mn}$ | Methyl Groups per 100 $CH_2$ | wt% VA in polymer |
| 1 | 15 | 15.6 | i-$C_4$=* | 500 | t-butyl peroctoate | 215 | 700 | 30 | 7.7 | 1740 | 10 | 15.6 |
| 2 | 15 | 15.6 | i-$C_4$= | 500 | " | 222 | 1500 | 30 | 14.7 | 3400 | 10.1 | 14.8 |
| 3 | 15 | 15.6 | i-$C_4$= | 500 | " | 221 | 1900 | 30 | 17.2 | 4090 | 6.8 | 13 |
| 4 | 15 | 15.7 | i-$C_4$= | 400 | " | 217 | 1200 | 30 | 10.3 | 3800 | 9.6 | 13.5 |
| 5 | 15 | 23 | i-$C_4$= | 400 | " | 212 | 1200 | 30 | 6.3 | 3600 | 12.2 | 15.4 |

i-$C_4$= isobutylene

Example 6

A large scale test of the process of the invention was carried out on a full-scale autoclave using varying conditions of pressure to demonstrate the effect on the product characteristics. The reactor feed comprised approximately 15 wt% vinyl acetate and 7—12 wt% isobutylene with the balance being ethylene. The autoclave was operated at 220°C and an initial pressure of 1500 bar which after reaching stable conditions was lowered to 1200 bar over 6 hours and again stable conditions were reached. Samples were taken at intervals and analysed to determine non-volatile materials (NVM, wt%), vinyl acetate content (measured by saponification), $M_n$ (estimated from melt viscosity measurements at 121°C), and in some instances for methyl groups per 100 $CH_2$ measured by 90 MHz $^1H$ NMR) and isobutylene content (measured by $^{13}C$ NMR). The ethylene side chain branching was calculated by subtracting branching due to isobutylene incorporation from the total branching. The results are given in Table 2. At steady states (samples a and g) products of the invention were produced. Sample c was taken during the lowering of the reactor pressure so that the reactor was not under steady state conditions. This product had lower molecular weight, higher isobutylene content and higher branching.

TABLE 2

| Samples | NVM, wt% | VA, wt% | Methyl Groups per 100 $CH_2$ total | Methyl Groups per 100 $CH_2$ resulting from Ethylene polymerisation | $\bar{M}_n$ | % Iso-butylene | P bar | T°C |
|---|---|---|---|---|---|---|---|---|
| a | 99.5 | 13.5 | 7.8 | 3.8 | 4100 | 6.5 | 1500 | 220 |
| b | 98.9 | 14.4 | | | 3000 | | 1500 | " |
| c | 98.5 | 13.8 | 13.7 | 6.8 | 2500 | 10.7 | 1450 | " |
| d | 98.5 | 14.7 | | | 2850 | | 1340 | " |
| e | 98.6 | 13.5 | | | 3300 | | 1250 | " |
| f | 98.9 | 13.3 | | | 3600 | | 1200 | " |
| g | 98.9 | 13.2 | 7.1 | 4.2 | 3950 | 4.6 | 1200 | " |

*Evaluation — CFPP Test*

The terpolymers of the invention were tested as additives for distillate fuel oil compositions as a combination comprising 25 wt% terpolymer and 75 wt% EVA with 36 wt% vinyl acetate, $M_n$ 2300 and 3—5 methyl termination side branches per 100 $CH_2$ (hereinafter "Polymer Y") prepared by a solution process. The performance of this additive combination as a flow improver was assessed in terms of its effect on various oils in the Cold Filter Plugging Point Test (CFPP Test) which is carried out by the procedure described in detail in "Journal of the Institute of Petroleum", Volume 52, Number 510, June 1966, pp. 173—185. This test is designed to correlate with the cold flow of a middle distillate in automotive diesels.

In brief, a 40 ml sample of the oil to be tested is cooled in a bath which is maintained at about −34°C to give non-linear cooling at about 1°C/min. Periodically (at each one degree Centigrade drop in temperature starting from at least 2°C above the cloud point) the cooled oil is tested for its ability to flow through a fine screen in a prescribed time period using a test device which is a pipette to whose lower end is attached an inverted funnel which is positioned below the surface of the oil to be tested. Stretched across the mouth of the funnel is a 350 mesh screen having an area defined by a 12 millimetre diameter. The periodic tests are each initiated by applying a vacuum to the upper end of the pipette whereby oil is drawn through the screen up into the pipette to a mark indicating 20 ml of oil. After each successful passage the oil is returned immediately to the CFPP tube. The test is repeated with each one degree drop in temperature until the oil fails to fill the pipette within 60 seconds. This temperature is reported as the CFPP temperature. The difference between the CFPP of an additive free fuel and of the same fuel containing additive. A more effective additive flow improver gives a greater CFPP depression at the same concentration of additive.

The results are given in Table 3 below for the additive combinations incorporating the terpolymers of Examples 6a and 6g, which shows the significant CFPP depression obtained. By way of comparison, the results are also given for additive X which is a combination of 25 wt% EVA (17 wt% vinyl acetate, $M_n$ 2800 and 7—8 methyl termination side branches per 100 $CH_2$) prepared by a solution process (polymer Z) and 75 wt% polymer Y which combination is taught in US 3 961 916 as a middle distillate flow improving additive. The results obtained using the terpolymer of Example 6c shows that increased branching and decreased molecular weight gives reduced CFPP performance in this type of additive.

The fuels used are identified in Table 4 in terms of their distillation characteristics — Initial Boiling point (IBP), 20% and 90% distillation points and their final Boiling point (FBP) — and their cloud and wax appearance point (WAP) temperatures.

TABLE 3

CFPP Test Results, °C

| Additive | Fuel: | A | B | C | D | E | F | G | H | Sum for |
|---|---|---|---|---|---|---|---|---|---|---|
| | Base CFPP, °C | −1.5 | −6 | −6 | −7.5 | −4.5 | −1 | −1.5 | −5.5 | 8 fuels |
| | Treat rate, ppm of polymer(s) | 68 | 36 | 36 | 270 | 36 | 90 | 68 | 45 | |
| 25% Example 6a + 75% Polymer Y | | −12.5 | −14.5 | −10 | −15 | −11.5 | −15 | −10.5 | −13.5 | −102.5 |
| 25% Example 6c + 75% Polymer Y | | −7.5 | −10.5 | −9 | −9.5 | −10 | −3.5 | −5 | −10.5 | −65 |
| 25% Example 6g +75% Polymer Y | | −12.5 | −13.5 | −11 | −13 | −11.5 | −14 | −12 | −12 | −99.5 |
| X (Comparative) | | −13 | −14 | −10 | −13.5 | −12.5 | −12 | −11 | −12.5 | −98.5 |

TABLE 4

| Fuel | Distillation (ASTM—D—86) °C | | | | Cloud/WAP °C |
|---|---|---|---|---|---|
| | IBP | 20% | 90% | FBP | |
| A | 162 | 236 | 349 | 380 | +4/+1 |
| B | 188 | 238 | 344 | 375 | +1/−4.5 |
| C | 180 | 226 | 341 | 368 | −4/−6 |
| D | 166 | 204 | 327 | 348 | −8/−8 |
| E | 174 | 218 | 340 | 352 | −2/−4 |
| F | 186 | 224 | 353 | 376 | +5/−1.5 |
| G | 200 | 260 | 350 | 314 | +1/−2 |
| H | 175 | 222 | 341 | 370 | −2/−5 |

A CFPP test was also carried out on fuels B and C using the terpolymers of Examples 6a, 6c and 6g alone. A comparison was provided by treatment with Polymer Z alone and also with Additive X. The results, expressed as the average of two repeats, are given in Table 5 below and show that each of the terpolymers of the invention show significant CFPP depression generally equivalent to or better than that obtained with polymer Z alone.

TABLE 5

CFPP response (°C)

| Polymer<br>Treat rate (ppm) | Example 6a | Example 6c | Example 6g | Polymer Z | Additive X |
|---|---|---|---|---|---|
| Fuel B — Base CFPP = | −5°C | | | | |
| 112 | −13 | −11.5 | −15.5 | −14.5 | −15.5 |
| 225 | −15.5 | −14 | −14 | −12.5 | −18 |
| Fuel C — Base CFPP = | −5°C | | | | |
| 112 | −13 | −14 | −14 | −12.5 | −17.5 |
| 225 | −14 | −15.5 | −13.5 | −14 | −18.5 |

*Pour Point Depression*

The performance of terpolymers of the invention in pour point depression was measured according to ASTM D—97 and compared to the performance of polymer Z alone and of Additive X. The results are shown for two fuels, I and J. Fuel I was a heavy fuel with a viscosity of 37.5 mPa.s at 50°C. Fuel J was a residual fuel with a pour point of 39°C.

The results of the test are given in Table 6 below and show that the terpolymers of Examples 6a, 6c and 6g give significant pour point depression in residual fuel J, while Example 6a and particularly Example 6g gives good results with heavy fuel I. This indicates that by appropriate selection of an additive comprising a terpolymer of the invention it is possible to obtain pour point depression even when treating difficult fuels.

TABLE 5

Pour point (°C)

| Polymer<br>Treat rate (ppm) | Example 6a | Example 6c | Example 6g | Polymer Z | Additive X |
|---|---|---|---|---|---|
| Fuel I — Base Pour = | +3°C | | | | |
| 450 | −6 | 0 | −9 | −12 | −9 |
| 900 | −9 | 0 | −12 | −15 | −12 |
| Fuel J — Base Pour = | +39°C | | | | |
| 900 | +33 | +33 | +33 | +33 | +39 |

*Viscosity Index Improvement*

The viscosity index was measured for the products of Examples 6a, 6c and 6g. A base oil (Stanco 150) was treated with 2 wt% of each product and the kinematic viscosity measured at 40°C and 100°C. From these results, using the procedure of ASTM DS 3913, the viscosity index (V.I.) was measured and compared to the V.I. of the untreated base oil. As may be seen from the results in Table 7 each product showed a significant activity in V.I. improvement.

TABLE 7

Viscosity Index Improvement

| | KV, 40°C | mPa.s 100°C | V.I. (ASTM DS 3913) |
|---|---|---|---|
| Base oil (Stanco 150) | 30.36 | 5.24 | 105 |
| +2% Example 6a | 39.01 | 6.69 | 127.5 |
| +2% Example 6c | 36.41 | 6.14 | 115.5 |
| +2% Example 6g | 38.86 | 6.61 | 124.5 |

**Claims**

1. An ethylene/vinyl acetate/iso olefin terpolymer characterised by having a $\overline{M}_n$ of from 1500 to 5500, having from 6 to 15 methyl groups per 100 methylene groups other than the methyl groups on the vinyl acetate and comprising from 10 to 20% by weight of vinyl acetate and from 3 to 15% by weight of an iso olefin of the general formula:

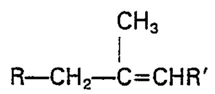

(I)

wherein R and R′ which may be the same or different each represent hydrogen or an alkyl group having from 1 to 4 carbon atoms.

2. An ethylene terpolymer as claimed in claim 1 having a $\overline{M}_n$ of from 1500 to 4500, having from 6 to 11 methyl groups per 100 methylene groups and comprising from 10 to 20% by weight vinyl acetate and from 3 to 8% by weight of isobutylene as measured by the peak at a chemical shift of 42.3 in the $^{13}C$ nmr spectrum of the polymer.

3. An ethylene terpolymer as claimed in claim 2, having a $\overline{M}_n$ of from 3000 to 4000 and from 6 to 9 methyl groups per 100 methylene groups.

4. An ethylene terpolymer as claimed in claim 2 or claim 3, having from 2 to 5 methyl groups resulting from ethylene polymerisation.

5. A process for the preparation of an ethylene terpolymer comprising from 10 to 20% vinyl acetate and from 3 to 15 wt% of an iso olefin of the general formula I as defined in claim 1 and having a $M_n$ of from 1500 to 5500 and 6 to 15 methyl groups per 100 methylene groups other than the methyl groups in the vinyl acetate, in which ethylene is polymerised with vinyl acetate at a pressure of at least 500 bar and at a temperature of at least 150°C in the absence of any significant amount of inert solvent and in the presence of from 7 to 25% by weight, based on the total reaction mixture, of the iso olefin.

6. A process according to claim 5 for the preparation of an ethylene terpolymer comprising from 10 to 20% vinyl acetate and from 3 to 15 wt% of isobutylene and having a $M_n$ of from 1500 to 4500 and 6 to 11 methyl groups per 100 methylene groups, in which process ethylene is polymerized with vinyl acetate at a pressure of at least 500 bar and at a temperature of at least 150°C in the absence of any significant amount of an inert solvent and in the presence of from 7 to 20% by weight, based on the total reaction mixture, of isobutylene, the reaction conditions and the amount of isobutylene being selected to give the desired combination of molecular weight and number of methyl groups in the product.

7. A process as claimed in claim 6, in which the reaction is carried out at a pressure of from 700 to 1900 bar.

8. A process as claimed in claim 6 or claim 7, in which the reaction temperature is from 170 to 270°C.

9. A process as claimed in any of claims 6 to 8, in which the residence time is from 20 to 120 seconds.

10. A distillate fuel oil composition comprising from 0.001 to 2 wt% of the oil of a terpolymer as claimed in claim 1.

11. A distillate fuel oil composition comprising from 0.001 to 2 wt% of the oil of a terpolymer as claimed in claim 2.

12. The use of a terpolymer as claimed in claim 1 or claim 2 as a flow improver in distillate fuel oils or a pour point depressant or a viscosity index improver in lubricating oils.

**Patentansprüche**

1. Ethylen/Vinylacetat/Isoolefin-Terpolymer gekennzeichnet durch ein $\overline{M}_n$ von 1500 bis 5500, 6 bis 15 anderen Methylgruppen als den Methylgruppen am Vinylacetat je 100 Methylengruppen und 10 bis 20 Gew.% Vinylacetat sowie 3 bis 15 Gew.% eines Isoolefins mit der allgemeinen Formel:

$$\begin{array}{c} \qquad\quad CH_3 \\ \qquad\quad | \\ R{-}CH_2{-}C{-}CHR' \end{array} \qquad (I),$$

in der R und R', die gleich oder verschieden sein können, jeweils Wasserstoff oder eine Alkylgruppe mit 1 bis 4 Kohlenstoffatomen bedeuten.

2. Ethylenterpolymer nach Anspruch 1 mit einem $\overline{M}_n$ von 1500 bis 4500, 6 bis 11 Methylgruppen je 100 Methylengruppen und 10 bis 20 Gew.% Vinylacetat sowie 3 bis 8 Gew.% Isobutylen gemäß Messung des Peaks bei einer chemischen Verschiebung von 42,3 im $^{13}C$ NMR-Spektrum des Polymeren.

3. Ethylenterpolymer nach Anspruch 2 mit einem $M_n$ von 3000 bis 4000 und 6 bis 9 Methylgruppen je 100 Methylengruppen.

4. Ethylenterpolymer nach Anspruch 2 oder 3 mit 2 bis 5 Methylgruppen, die aus der Ethylenpolymerisation resultieren.

5. Verfahren zur Herstellung eines Ethylenterpolymeren mit 10 bis 20% Vinylacetat und 3 bis 15 Gew.% eines Isoolefins mit der allgemeinen Formel I gemäß der Definition in Apsurch 1 und einem $M_n$ von 1500 bis 5500 sowie 6 bis 15 Anderen Methylgruppen als den Methylgruppen im Vinylacetat je 100 Methylengruppen, bei dem Ethylen bei einem Druck von mindestens 500 bar und einer Temperatur von mindestens 150°C in Abwesenheit signifikanter Mengen inertem Lösungsmittel und in Gegenwart von 7 bis 25 Gew.%, bezogen auf die gesamte Reaktionsmischung, des Isoolefins mit Vinylacetat polymerisiert wird.

6. Verfahren nach Anspruch 5 für die Herstellung eines Terpolymeren mit 10 bis 20% Vinylacetat, 3 bis 15 Gew.% Isobutylen und einem $M_n$ von 1500 bis 4500 sowie 6 bis 11 Methylgruppen je 100 Methylengruppen, bei dem Ethylen bei einem Druck von mindestens 500 bar und einer Temperatur von mindestens 150°C in Abwesenheit signifikanter Mengen inertem Lösungsmittel und, bezogen auf die gesamte Reaktionsmischung, in Gegenwart von 7 bis 20 Gew.% Isobutylen mit Vinylacetat polymerisiert wird, wobei die Reaktionsbedingungen und die Menge an Isobutylen so gewählt werden, daß die gewünschte Kombination von Molekulargewicht und Anzahl Methylengruppen im Produkt erhalten wird.

7. Verfahren nach Anspruch 6, bei dem die Reaktion bei einem Druck von 700 bis 1900 bar durchgeführt wird.

8. Verfahren nach Anspruch 6 oder 7, bei dem Reaktionstemperatur 170 bis 270°C beträgt.

9. Verfahren nach einem der Ansprüche 6 bis 8, bei dem die Verweilzcit 20 bis 120 Sck. beträgt.

10. Destillatbrennstoffölzusammensetzung, die 0,001 bis 2 Gew.% bezogen auf das Öl eines Terpolymeren gemäß Anspruch 1 enthält.

11. Destillatbrenstoffölzusammensetzung, die 0,001 bis 2 Gew.% bezogen auf das Öl eines Terpolymeren gemäß Anspruch 2 enthält.

12. Verwendung eines Terpolymeren gemäß Anspruch 1 oder 2 als Fließverbesserer in Destillatbrennstoffölen oder Fließpunkterniedriger oder Viskositätsindexverbesserer in Schmierölen.

**Revendications**

1. Terpolymère éthylène/acétate de vinyle/iso-oléfine, caractérisé en ce qu'il a une valeur $\overline{M}_n$ de 1500 à 5500, il comprend 6 à 15 groupes méthyle pour 100 groupes méthylène autres que les groupes méthyle portés par l'acétate de vinyle et il comprend 10 à 20% en poids d'acétate de vinyle et 3 à 15% en poids d'une iso-oléfine de formule générale:

$$\begin{array}{c} \qquad\quad CH_3 \\ \qquad\quad | \\ R{-}CH_2{-}C{=}CHR' \end{array} \qquad (I)$$

dans laquelle R et R', qui peuvent être identiques ou différents, représentent chacun l'hydrogène ou un groupe alkyle ayant 1 à 4 atomes de carbone.

2. Terpolymère d'éthylène suivant la revendication 1, ayant une valeur $\overline{M}_n$ de 1500 à 4500, comprenant 6 à 11 groupes méthyle pour 100 groupes méthylène et comprenant 10 à 20% en poids d'acétate de vinyle et 3 à 8% en poids d'isobutylène, mesuré d'après le pic correspondant à une dérive chimique de 42,3 dans le spectre de résonance magnétique des noyaux de $^{13}C$ du polymère.

3. Terpolymère d'éthylène suivant la revendication 2, ayant une valeur $\overline{M}_n$ de 3000 à 4000 et comprenant 6 à 9 groupes méthyle pour 100 groupes méthylène.

4. Terpolymère d'éthylène suivant la revendication 2 ou la revendication 3, ayant 2 à 5 groupes méthyle résultant de la polymérisation de l'éthylène.

5. Procédé de production d'un terpolymère d'éthylène comprenant 10 à 20% d'acétate de vinyle et 3 à

15% en poids d'une iso-oléfine de formule générale I telle que définie dans la revendication 1 et ayant une valuer $M_n$ de 1500 à 5500 et 6 à 15 groupes méthyle pour 100 groupes méthylène autres que les groupes méthyle de l'acétate de vinyle, dans lequel de l'éthylène est polymérisé avec de l'acétate de vinyle à une pression d'au moins 500 bars et à une température d'au moins 150°C en l'absence de toute quantité notable de solvant inerte et en présence de 7 à 25% en poids, sur la base du mélange réactionnel total, de l'iso-oléfine.

6. Procédé suivant la revendication 5 pour la production d'un terpolymère d'éthylène comprenant 10 à 20% d'acétate de vinyle et 3 à 15% en poids d'isobutylène et ayant une valeur $M_n$ de 1500 à 4500 et 6 à 11 groupes méthyle pour 100 groupes méthylène, procédé dans lequel de l'éthylène est polymérisé avec de l'acétate de vinyle à une pression d'au moins 500 bars et à une température d'au moins 150°C en l'absence de toute quantité notable d'un solvant inerte et en présence de 7 à 20% en poids, sur la base du mélange réactionnel total, d'isobutylène, les conditions réactionnelles et la quantité d'isobutylène étant choisies de manière que le produit allie le poids moléculaire et le nombre de groupes méthyle désirés.

7. Procédé suivant la revendication 6, dans lequel la réaction est conduite à une pression de 700 à 1900 bars.

8. Procédé suivant la revendication 6 ou 7, dans lequel la température de réaction va de 1700 à 270°C.

9. Procédé suivant l'une quelconque des revendications 6 à 8, dans lequel la durée de contact va de 20 à 120 secondes.

10. Composition d'huile combustible distillée, comprenant 0,001 à 2% en poids de l'huile, d'un terpolymère suivant la revendication 1.

11. Composition d'huile combustible distillée, comprenant 0,001 à 2% en poids de l'huile, d'un terpolymère suivant la revendication 2.

12. Utilisation d'un terpolymère suivant la revendication 1 ou la revendication 2 comme agent améliorant l'écoulement dans des huiles combustibles distillées ou comme agent abaissant le point d'écoulement ou améliorant l'indice de viscosité dans des huiles lubrifiantes.